# EUROPÄISCHE PATENTSCHRIFT

(11) **EP 4 166 992 B1**
(45) Veröffentlichungstag und Bekanntmachung des Hinweises auf die Patenterteilung: **13.11.2024**
(21) Anmeldenummer: 21202325.3
(22) Anmeldetag: 13.10.2021
(51) Int. Cl.: G01V 8/12, G01S 7/481, G01S 17/42

(54) **OPTISCHER SENSOR**
OPTICAL SENSOR
CAPTEUR OPTIQUE

(43) Veröffentlichungstag der Anmeldung: 19.04.2023
(73) Patentinhaber: Leuze electronic GmbH + Co. KG, 73277 Owen/Teck (DE)
(72) Erfinder: Heckmayr, Alexander, 86807 Buchloe (DE); Wursthorn, Viktor, 72636 Frickenhausen (DE); Quapil, Dr., Gerald, 73277 Owen/Teck (DE); Hubert, Jörg, 85244 Röhrmoos (DE); Feller, Bernhard, 86316 Friedberg (DE)
(74) Vertreter: Ruckh, Rainer Gerhard

(56) Entgegenhaltungen:
- EP-A1- 3 705 368
- DE-A1- 10 313 194
- DE-A1- 102004 055 851
- DE-A1- 102009 034 848
- DE-B4- 102004 031 024
- DE-U1- 202015 106 835

## Beschreibung

Die Erfindung betrifft einen optischen Sensor gemäß dem Oberbegriff des Anspruchs 1.

Derartige Sensoren dienen generell zur Erfassung von Objekten in einem Überwachungsbereich. Ein Beispiel für derartige Sensoren sind optische Sensoren in Form von Flächendistanzsensoren. Ein derartiger optischer Sensor weist einen Lichtstrahlen emittierenden Sender und einen Lichtstrahlen empfangenden Empfänger auf. Der Sender und der Empfänger bilden einen Distanzsensor. Weiterhin ist eine Ablenkeinheit vorgesehen, mittels derer die Lichtstrahlen periodisch im Überwachungsbereich geführt sind.

Die Lichtstrahlen werden über die Ablenkeinheit in den Überwachungsbereich geführt. Von einem Objekt zurückreflektierte Lichtstrahlen gelangen über die Ablenkeinheit zurück zum Empfänger. In einer Auswerteeinheit wird abhängig von Empfangssignalen des Empfängers ein Objektfeststellungssignal generiert.

Mit einem derartigen Sensor kann eine Positionsbestimmung von Objekten im Überwachungsbereich durchgeführt werden. Diese Positionsbestimmungen können beispielsweise für eine Schutzfeldüberwachung genutzt werden. Damit kann, insbesondere wenn der optische Sensor ein Sicherheitssensor ist, eine Gefahrenbereichsüberwachung an einer gefahrbringenden Anlage durchgeführt werden. Mit dem optischen Sensor wird dann als Objektfeststellungssignal ein Schaltsignal generiert, deren Schaltzustände angeben, ob sich ein Objekt im Schutzfeld befindet oder nicht.

Wird mit dem optischen Sensor ein Objekt im Schutzfeld detektiert, wird mit dem Schaltsignal die Anlage in einen sicheren Zustand überführt, insbesondere abgeschaltet.

Bei komplexeren Überwachungsaufgaben werden typischerweise mehrere derartiger Sensoren, insbesondere optische Sensoren eingesetzt. Die optische Sensoren können sich derartig beeinflussen, dass Lichtstrahlen des einen optischen Sensors in einen anderen optischen Sensor eingestrahlt werden, wodurch in diesem fehlerhafte Objektfeststellungssignale generiert werden, insbesondere derart, dass ein Objekt gemeldet wird, obwohl keines vorhanden ist.

Die EP 3 705 368 A1 betrifft eine Überwachungsvorrichtung für eine mobile Maschine, mit einem an der mobilen Maschine angeordneten Sensor und einer die mobile Maschine steuernden Steuerung. Der Sensor ist ausgebildet, Objekte in einem Schutzfeld zu erfassen, wobei der Sensor bei Detektion eines Objekts im Schutzfeld ein Sicherheitssignal für die mobile Maschine generiert. Mit dem Sensor werden Positionen von außerhalb des Schutzfelds angeordneten Hindernissen ermittelt. Abhängig hiervon wird eine Umfahrungstrajektorie für die mobile Maschine derartig berechnet, dass die entlang der Umfahrungstrajektorie bewegte mobile Maschine das Hindernis ohne Schutzfeld-Verletzung umfährt.

In der DE 10 2009 034 848 A1 wird ein optoelektronischer Sensor zur Überwachung eines inneren Überwachungsbereichs und eines äußeren Überwachungsbereichs angegeben, welcher den inneren Überwachungsbereich zumindest teilweise umgibt, mit einer Auswertungseinheit, die für eine Objekterkennung mit Störausblendung, welche von dem Sensor erfasste potentielle Objekte als Objekte oder Störungen erkennt, sowie für eine Objektverfolgung der Objekte zumindest in dem äußeren Überwachungsbereich ausgebildet ist. Dabei ist die Auswertungseinheit dafür ausgebildet, potentielle Objekte als Störung zu erkennen, wenn eine Eigenschaft, insbesondere eine Position, ein Betrag oder eine Richtung der Geschwindigkeit des potentiellen Objekts unverträglich mit der Objektverfolgung ist.

Die DE 10 2004 031 024 B4 betrifft ein Verfahren zur Erfassung von Objekten in einem Überwachungsbereich mittels eines einen Sender und Empfänger aufweisenden optischen Sensors, wobei der Sender Sendelichtimpulse emittiert, und wobei aus der Laufzeit eines zu einem Objekt geführten und von diesem als Empfangslichtimpuls zum Empfänger zurückreflektierenden Sendelichtimpulses die Distanz des Objekts bestimmt wird. Als Bezugspunkt für die Laufzeitmessung wird die Lage des Scheitelpunkts des Empfangslichtimpulses bestimmt, in dem das durch den Empfangslichtimpuls im Empfänger generierte Empfangssignal mit wenigstens einem Schwellwert bewertet wird, wobei ein erstes Stoppsignal STOP1 generiert wird, wenn das Empfangssignal den Schwellwert überschreitet und ein zweites Stoppsignal STOP2 generiert wird, wenn das Empfangssignal den Schwellwert unterschreitet, und wobei aus den Stoppsignalen STOP1, STOP2 die Lage des Scheitelpunkts des Empfangslichtimpulses abgeleitet wird.

Die DE 10 2004 055 851 A1 betrifft einen optischen Sensor zur Erfassung von Objekten in einem Überwachungsbereich mit einem Sendelichtstrahlen emittierenden Sender und einem Empfangslichstrahlen empfangenden Empfänger, wobei die Sendelichtstrahlen und die Empfangslichtstrahlen über eine Ablenkeinheit geführt sind und ein Austrittsfenster in einer Frontwand eines Gehäuses durchsetzen. Weiterhin weist der optische Sensor eine Auswerteeinheit auf, in welcher in Abhängigkeit der Empfangssignale am Ausgang des Empfängers ein Objektfeststellungssignal generiert wird. Die Ablenkeinheit weist einen drehbaren Umlenkspiegel auf, dessen Spiegelfläche eine vorgegebene Krümmung zur Kompensation von Verzerrungen des Strahlquerschnitts der Empfangslichtstrahlen, welche durch den Durchtritt der Empfangslichtstrahlen durch das Austrittsfenster bedingt sind, aufweist.

Die DE 103 13 194 A1 betrifft einen optischen Sensor mit einem Distanzsensorelement, welches einen Sendelichtstrahlen emittierenden Sender und einen Empfangslichtstrahlen empfangenden Empfänger aufweist. Zudem ist eine Ablenkeinheit vorgesehen, mittels derer die Sendelichtstrahlen periodisch innerhalb eines einen Überwachungsbereich definierenden Winkelbereichs geführt sind. Weiterhin ist eine Auswerteeinheit zur Auswertung der am Ausgang des Empfängers anstehenden Empfangssignale vorgesehen. Der Winkelbereich ist in eine vorgegebene Anzahl von Winkelsegmenten unterteilt, wobei für jedes Winkelsegment in der Auswerteeinheit aus den Empfangssignalen jeweils wenigstens ein Distanzwert abgeleitet wird. In der Auswerteeinheit ist wenigstens ein Schutzfeld abgespeichert. Zudem sind in dieser winkelabhängige Auflösungsbereiche vorgegeben, deren Größen an die Breite eines in der jeweiligen Winkelposition am Rand des Schutzfelds angeordneten Referenzobjekts angepasst sind. In der Auswerteeinheit wird nur dann eine Objektmeldung generiert, wenn in sämtlichen Winkelsegmenten wenigstens eines Auflösungsbereichs innerhalb des Schutzfelds liegende Distanzwerte registriert werden.

Die DE 20 2015 106 835 U1 betrifft einen Sensor zur Erfassung von Objekten in einem Überwachungsbereich, mit einem feststehenden Grundmodul und einem relativ zum Grundmodul drehbaren Sensormodul, wobei das Sensormodul wenigstens einen elektromagnetische Strahlen emittierenden Sender und wenigstens einen elektromagnetische Strahlen empfangenden Empfänger aufweist, und wobei in dem Sensormodul eine Auswerteeinheit vorgesehen ist, in welcher in Abhängigkeit von Empfangssignalen des Empfängers, die durch vom Sender emittierende und von einem zu detektierenden Objekt zum Empfänger reflektierte elektromagnetische Strahlen generiert werden, ein Objektfeststellungssignal erzeugt wird. In dem Sensormodul ist eine berührungslos arbeitende Schnittstelleneinheit vorgesehen, mittels derer das Objektfeststellungssignal an eine externe Einheit übertragen wird.

Der Erfindung liegt die Aufgabe zugrunde, die Funktionssicherheit eines Sensors der eingangs genannten Art zu verbessern.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen Sensor zur Erfassung von Objekten in einem Überwachungsbereich mit einem Sendestrahlen emittierenden Sender, einem Empfangsstrahlen empfangenden Empfänger, einem Strahlführungsmittel, das eine Drehbewegung ausführt, so dass die Sendestrahlen innerhalb aufeinanderfolgenden Scans periodisch innerhalb des Überwachungsbereichs geführt sind, und mit einer Auswerteeinheit, in welcher abhängig von Empfangssignalen des Empfängers ein Objektfeststellungssignal generiert wird. Zur Generierung des Objektfeststellungssignals werden Empfangssignale mehrerer Scans herangezogen. In einem Einrichtbetrieb wird eine Drehzahl des Strahlführungsmittels ausgewählt, wobei in einem darauffolgenden Arbeitsbetrieb, in welchem Objekterfassungen erfolgen, das Strahlführungsmittel mit dieser Drehzahl betrieben wird.

Die Erfindung betrifft auch ein entsprechendes Verfahren.

Bei dem erfindungsgemäßen Sensor werden zur Generierung eines Objektfeststellungssignals die Empfangssignale mehrerer Scans herangezogen.

Dadurch wird eine Mehrfachauswertung durchgeführt, wodurch die Detektionssicherheit des Sensors erhöht wird.

Vorteilhaft werden zur Generierung eines Objektfeststellungssignals die Empfangssignale mehrerer direkt aufeinanderfolgenden Scans herangezogen.

Insbesondere werden zur Generierung eines Objektfeststellungssignals die Empfangssignale zweier direkt aufeinanderfolgender Scans herangezogen.

Die Mehrfachauswertung über mehrere Scans zur Generierung des Objektfeststellungssignals wird erfindungsgemäß mit einer Drehzahleinstellung des Strahlführungsmittels kombiniert, die vor dem Arbeitsbetrieb, in dem die Objektdetektionen erfolgen, durchgeführt wird.

Die Drehzahleinstellung des Strahlführungsmittels erfolgt in einem Einrichtbetrieb. Dieser kann nach Auslieferung des Sensors vor dessen Inbetriebnahme erfolgen. Insbesondere kann die Drehzahleinstellung bereits während des Produktionsprozesses des Sensors erfolgen. Nach dieser Drehzahleinstellung wird das Strahlführungsmittel des Sensors im Arbeitsbetrieb mit dieser ausgewählten Drehzahl betrieben. Entsprechend der eingestellten Drehzahl ergibt sich für die einzelnen Scans eine bestimmte Scandauer.

Wesentlich hierbei ist, dass für unterschiedliche Sensoren unterschiedliche Drehzahlen für deren Strahlführungsmittel im Arbeitsbetrieb erhalten werden.

Dadurch ist gewährleistet, dass bei einer Applikation, insbesondere bei einer Absicherung eines Gefahrenbereichs, bei der mehrere Sensoren eingesetzt werden, eine gegenseitige Beeinflussung der Sensoren, die zu Fehldetektionen führen kann, ausgeschlossen wird.

Eine Gefahr einer gegenseitigen Beeinflussung besteht dann, wenn Sendestrahlen eines Sensors direkt oder nach Reflexion an einem Gegenstand in einen anderen Sensor eingestrahlt werden. Würden beide Sensoren Strahlführungsmittel aufweisen, die bei exakt gleicher Drehzahl arbeiten, so würden vom einen Sensor in den anderen Sensor eingestrahlte Sendestrahlen dort bei jedem Scan synchron zum Sendezeitpunkt dessen Sendestrahlen ein Empfangssignal generieren, das ein Objekt im Überwachungsbereich vortäuschen würde. Eine solche Fehldetektion könnte insbesondere bei der erfindungsgemäßen Mehrfachdetektion über mehrere Scans nicht als Störung erkannt und eliminiert werden, da die Störeinstrahlung vom Sender des anderen Sensors völlig synchron zum eigenen Sendebetrieb über mehrere Scans hinweg erfolgt.

Diese Fehlerquelle wird erfindungsgemäß dadurch sicher ausgeschlossen, dass die Strahlführungsmittel unterschiedlicher Sensoren bei unterschiedlichen Drehzahlen betrieben werden. Dadurch sind die Störeinstrahlungen des anderen Sensors asynchron zum Sendebetrieb des ersten Sensors, das heißt die Störeinstrahlung generiert im ersten Sensor Empfangssignale die innerhalb der verschiedenen Scans zu unterschiedlichen Zeitpunkten registriert werden und dadurch als Störungen identifiziert werden können.

Dadurch werden Fehldetektionen durch gegenseitige Beeinflussungen der Sensoren weitgehend vermieden, wodurch die Funktionssicherheit des erfindungsgemäßen Sensors erheblich erhöht wird.

Besonders vorteilhaft ist der Sensor als Flächendistanzsensor, das heißt als scannender Distanzsensor ausgebildet. Innerhalb jedes Scans wird die Distanz eines Objekts insbesondere durch eine Lichtlaufzeitmessung bestimmt. Dabei werden über mehrere Scans Mehrfach-Distanzmessungen durchgeführt. Da sich das zu detektierende Objekt während mehrerer aufeinanderfolgender Scans nicht oder nicht wesentlich bewegt, werden für mehrere aufeinanderfolgende Scans geringfügig unterschiedliche Distanzwerte erhalten, wenn eine tatsächliche Objektdetektion mit Schutzfeldverletzung vorliegt. Dies bedeutet, dass die Zeitdifferenz zwischen Aussenden des Sendestrahls und Empfangen des Empfangssignals aufeinanderfolgende Scans oder aufeinanderfolgende Messungen sich nur geringfügig unterscheidet.

Bei einer Störeinstrahlung von einem anderen Sensor variiert jedoch die Zeitdifferenz zwischen Aussenden des Sendestrahls und Empfangen des Empfangssignals bedingt durch die Störeinrichtung des anderen Sensors über mehrere Scans hinweg deutlich, da die Strahlführungsmittel mit verschiedenen Drehzahlen betrieben werden. Damit können derartige Störeinstrahlungen durch Anwenden über mehrere Scans als Fehlersignale identifiziert und ausgeblendet werden, wodurch Fehldetektionen vermieden werden.

Gemäß einer vorteilhaften Ausführungsform wird die Drehzahl mittels eines Drehzahl-Index aus einem Drehzahl-Vektor ausgewählt.

Die Auswahl erfolgt auf Basis einer Software. Im Vergleich zu einer hardwarebezogenen Drehzahleinstellung, beispielsweise über Dip-Schalter, kann eine Auswahl aus einer beträchtlich größeren Auswahl unterschiedlicher Drehzahlen erfolgen, die vorteilhaft größer als 2 ist.

Besonders vorteilhaft ist der Drehzahl-Index und/oder der Drehzahl-Vektor durch eine Prüfsumme abgesichert.

Dadurch wird eine fehlersichere Auswahl der Drehzahl für das Strahlführungsmittel ermöglicht.

Vorteilhaft ist der Drehzahl-Index ein Konfigurations-Parameter oder wird aus einem Konfigurations-Parameter abgeleitet.

Insbesondere weist der Sensor eine Seriennummer auf, wobei dann der Drehzahl-Index aus der Seriennummer abgeleitet wird.

Der erfindungsgemäße Sensor kann prinzipiell ein Radarsensor sein. Besonders vorteilhaft ist der Sensor als optischer Sensor ausgebildet. Dann weist der Sensor einen Lichtstrahlen emittierenden Sender und einen Lichtstrahlen empfangenden Empfänger auf.

In beiden Fällen kann gemäß einer ersten Variante der Sender und der Empfänger in einem rotierenden Messkopf gelagert sein, welcher das Strahlführungsmittel bildet.

Der Sender und der Empfänger sind dann ortsfest im Messkopf angeordnet. Durch die Drehbewegung des Messkopfs werden der Sender und der Empfänger mitgedreht, so dass die Sendestrahlen des Senders periodisch den Überwachungsbereich überstreichen.

Gemäß einer zweiten Variante sind die Sendestrahlen über eine rotierende Ablenkeinheit geführt, die das Strahlführungsmittel bildet.

Insbesondere kann die Ablenkeinheit einen Drehspiegel oder ein Polygonspiegelrad aufweisen.

Der Sender und der Empfänger wird dann ortsfest in einem Gehäuse des Sensors untergebracht. Die Sendestrahlen werden durch die rotierende Ablenkeinheit periodisch im Überwachungsbereich geführt.

Gemäß einer vorteilhaften Ausführungsform ist der Sensor ein Sicherheitssensor.

Der Sicherheitssensor weist einen fehlersicheren Aufbau auf, was insbesondere durch eine redundant aufgebaute Auswerteeinheit erreicht wird. Beispielsweise kann die Auswerteeinheit aus zwei sich zyklisch gegenseitig überwachenden Rechnereinheiten bestehen.

Der Sicherheitssensor kann in sicherheitstechnischen Anwendungen eingesetzt werden, insbesondere zur Gefahrenbereichsüberwachung an gefahrbringenden Anlagen. Insbesondere kann der Sicherheitssensor auch an einer mobilen Einheit wie zum Beispiel einem Fahrzeug angeordnet sein, um deren Vorfeld zu überwachen.

Gemäß einer vorteilhaften Weiterbildung weist der Sensor eine Schnittstelle zum Anschluss an eine externe Steuereinheit auf.

Dabei werden über die Schnittstelle Messdaten an die externe Steuereinheit übertragen.

Insbesondere bildet die externe Steuereinheit ein Navigationssystem aus.

In diesem Fall ist der Sensor vorteilhaft ein Flächendistanzsensor, der Positionswerte von der Umgebung des Sensors bildet. Der Sensor ist dann auf einer mobilen Einheit angeordnet.

Die Erfindung wird im Folgenden anhand der Zeichnungen erläutert. Es zeigen:
- Figur 1:: Erstes Ausführungsbeispiel des erfindungsgemäßen Sensors.
- Figur 2:: Zweites Ausführungsbeispiel des erfindungsgemäßen Sensors.
- Figur 3:: Schematische Darstellung einer Sensoranordnung 12 mit dem erfindungsgemäßen Sensor auf einem Fahrzeug.
- Figur 4:: Blockschaltbild einer Sensoranordnung gemäß Figur 3.
- Figur 5:: Anordnung mit zwei erfindungsgemäßen Sensoren.
- Figur 6:: Erstes Zeitdiagramm für die Anordnung gemäß Figur 5.
- Figur 7:: Zweites Zeitdiagramm für die Anordnung gemäß Figur 5.

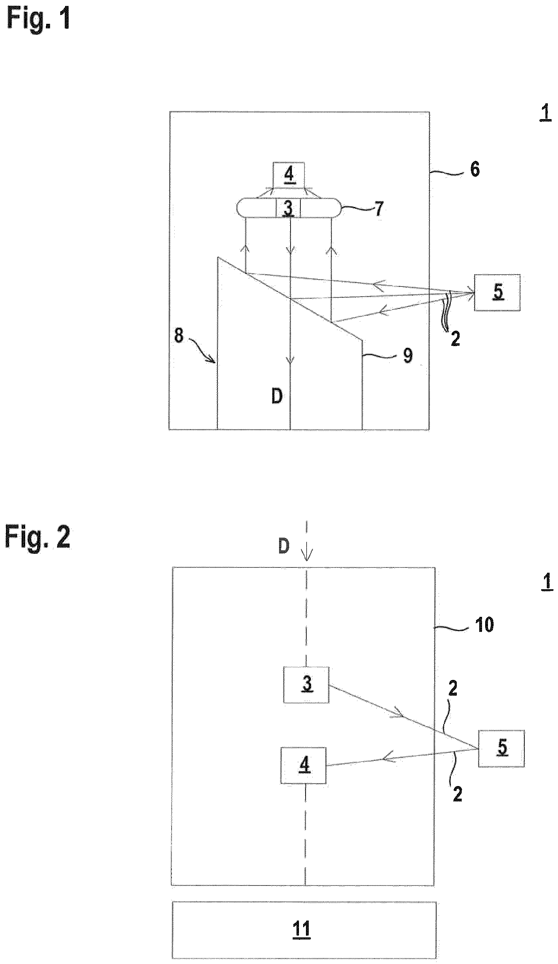

Die Figuren 1 und 2 zeigen Ausführungsbeispiele des erfindungsgemäßen Sensors 1. Der Sensor 1 kann prinzipiell als Radarsensor ausgebildet sein. In den vorliegenden Ausführungsbeispielen ist der Sensor 1 als optischer Sensor ausgebildet.

Figur 1 zeigt ein Ausführungsbeispiel eines optischen Sensors in Form eines Flächendistanzsensors, das heißt eines scannenden Distanzsensors. Zur Durchführung von Distanzmessungen weist der optische Sensor einen Lichtstrahlen 2 emittierenden Sender 3 und einen Lichtstrahlen 2 empfangenden Empfänger 4 auf. Der Sender 3 emittiert Lichtstrahlen 2 in Form von Lichtimpulsen. Wie Figur 1 zeigt, werden die Lichtstrahlen 2 an einem zu detektierenden Objekt 5 reflektiert, wobei die entsprechende Lichtlaufzeit der Lichtimpulse zum Objekt 5 und zurück zum optischen Sensor für die Distanzbestimmungen ausgewertet werden.

Wie Figur 1 zeigt, sind die Sensorkomponenten der optischen Sensoren in einem Gehäuse 6 integriert, wobei der Sender 3 sowie der Empfänger 4 mit einer vorgeordneten Sendeoptik beziehungsweise Empfangsoptik 7 stationär im Gehäuse 6 angeordnet sind. Mit dem optischen Sensor erfolgt eine Objektdetektion in einem flächigen Erfassungsbereich dadurch, dass die Lichtstrahlen 2 mittels einer Ablenkeinheit 8 periodisch abgelenkt werden. Die Ablenkeinheit 8 ist motorisch angetrieben und umfasst einen um eine Drehachse D drehbaren Drehspiegel 9, an dem die Lichtstrahlen 2 abgelenkt werden. Anstelle eines Drehspiegels 9 kann auch ein Polygonspiegelrad vorgesehen sein.

Figur 2 zeigt eine Variante des Flächendistanzsensors gemäß Figur 1. In diesem Fall erfolgt die periodische Ablenkung der Lichtstrahlen 2 dadurch, dass der Sender 3 und der Empfänger 4 in einem um eine Drehachse D drehbaren Messkopf 10 angeordnet sind, wobei der Messkopf 10 auf einem Sockel 11 drehbar gelagert ist.

Sowohl die Ablenkeinheit 8 des Sensors 1 gemäß Figur 1 als auch der Messkopf 10 des Sensors 1 gemäß Figur 2 bilden ein Strahlführungsmittel mittels dessen die Lichtstrahlen 2 periodisch in einem Überwachungsbereich abgelenkt werden, das heißt die Lichtstrahlen überstreichen in aufeinanderfolgenden Scans den Überwachungsbereich.

Der Sensor 1 weist eine in den Figuren 1 und 2 nicht dargestellte Auswerteeinheit auf, in der die Empfangssignale des Empfängers 4 ausgewertet werden können.

Für den Einsatz im Bereich der Sicherheitstechnik sind die optische Sensoren gemäß den Figuren 1 und 2 als Sicherheitssensoren ausgebildet und weisen einen fehlersicheren Aufbau auf, der beispielsweise durch eine redundante Auswerteeinheit in Form zweier sich zyklisch gegenseitig überwachender Prozessoren realisiert werden kann.

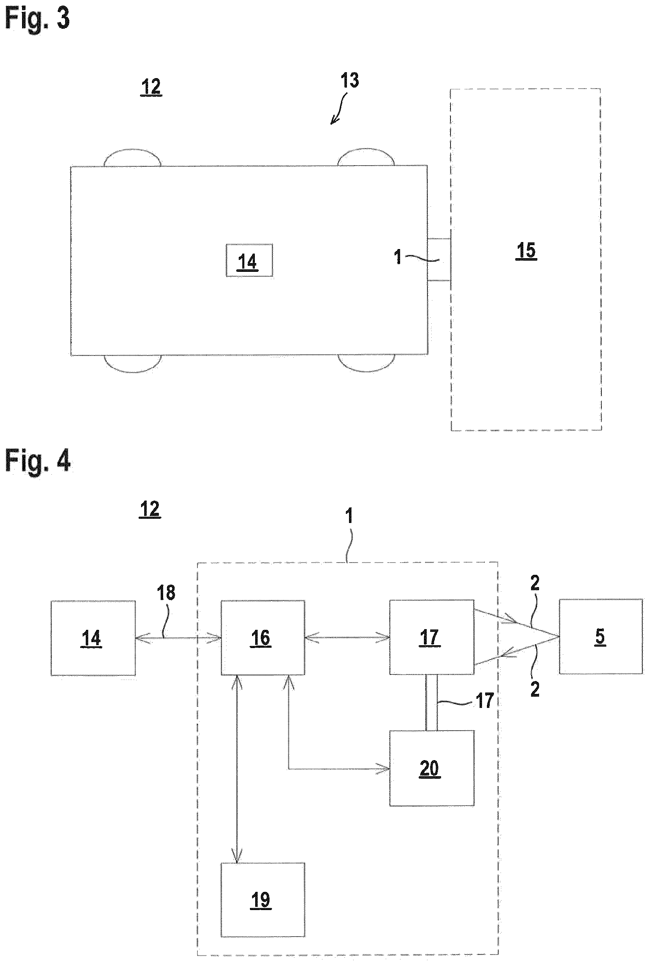

Figur 3 zeigt eine Sensoranordnung 12 mit einem Sensor 1 gemäß den Figuren 1 oder 2 auf einem Fahrzeug 13, wobei das Fahrzeug 13 von einem fahrerlosen Transportsystem gebildet sein kann. Das Fahrzeug 13 wird von einer Fahrzeugsteuerung 14 gesteuert.

Mit dem als Sicherheitssensor ausgebildeten Sensor 1 wird eine Kollisionsüberwachung durchgeführt. Hierzu wird im Sicherheitssensor ein gegebenenfalls geschwindigkeitsabhängiges Schutzfeld 15 vorgegeben, welches das Vorfeld des Fahrzeugs 13 abdeckt.

In der Auswerteeinheit des Sicherheitssensors wird als Objektfeststellungssignal ein binäres Schaltsignal generiert, dessen Schaltzustände angeben, ob sich ein Objekt 5 im Überwachungsbereich befindet oder nicht. Das Schaltsignal wird über eine fehlersichere Ausgangsstruktur des Sicherheitssensors an die Fahrzeugsteuerung 14 ausgegeben. Wird im Schutzfeld 15 ein Objekt 5 erfasst, wird durch das entsprechende Schaltsignal eine Sicherheitsfunktion derart ausgelöst, dass das Fahrzeug 13 angehalten wird.

Figur 4 zeigt ein Blockschaltbild der Sensoranordnung 12 gemäß Figur 3. Wie Figur 3 zeigt, weist der Sicherheitssensor eine Steuerlogik 16 auf, der die Sensormesstechnik 17 des Sicherheitssensors steuert. Die Steuerlogik 16 enthält die Auswerteeinheit des Sicherheitssensors. Die Sensormesstechnik 17 umfasst den Sender 3, den Empfänger 4 und das Strahlführungsmittel in Form des Messkopfs 10 oder in Form der Ablenkeinheit 8, die zur Erfassung von Objekten 5 mittels der Lichtstrahlen 2 dient.

Neben der nicht dargestellten fehlersicheren Ausgangsstruktur ist der Sicherheitssensor mit der Fahrzeugsteuerung 14 des Fahrzeugs 13 über eine serielle Schnittstelle 18 verbunden.

Die Fahrzeugsteuerung 14 bildet im vorliegenden Fall ein Navigationssystem aus. Zur Navigation werden vom Sicherheitssensor über die serielle Schnittstelle 18 Messwerte, das heißt Distanzwerte von der erfassten Umgebung der Fahrzeugsteuerung 14 weiter gegeben.

Erfindungsgemäß kann für den Sicherheitssensor in einem Einrichtbetrieb vor Aufnahme des Arbeitsbetriebs, in welchem Objektdetektionen durchgeführt werden, die Drehzahl des Strahlführungsmittels eingestellt werden. Diese Einstellung erfolgt softwaregesteuert durch eine Auswahl einer Drehzahl aus einer Anzahl von zur Verfügung stehenden Drehzahlen. Im vorliegenden Fall ist hierzu ein von der Steuerlogik 16 gesteuertes Softwaremodul in Form eines Drehzahl-Vektors 19 vorgesehen, der die auswählbaren Drehzahlen enthält. Die Auswahl erfolgt mittels eines von der Steuerlogik 16 gesteuerten Drehzahl-Index. Mit der ausgewählten Drehzahl steuert die Steuerlogik 16 das Antriebssystem 20 des Sicherheitssensors an, das vom Antrieb des Strahlführungsmittels ausgebildet ist. Dadurch wird das Strahlführungsmittel mit der ausgewählten Drehzahl betrieben.

Vorteilhaft ist der Drehzahl-Index und/oder der Drehzahl-Vektor 19 durch eine Prüfsumme abgesichert.

Dadurch wird eine fehlersichere Auswahl der Drehzahl ermöglicht.

Die Drehzahlauswahl kann insbesondere bereits im Produktionsprozess des Sensors erfolgen.

Vorteilhaft ist der Drehzahl-Index ein Konfigurations-Parameter oder wird aus einem Konfigurations-Parameter abgeleitet.

Insbesondere kann der Drehzahl-Index aus der Seriennummer des jeweiligen Sensors abgeleitet werden.

Durch die Drehzahlauswahl wird insbesondere erreicht, dass bei Applikationen, in denen mehrere Sensoren 1 im Einsatz sind, die Strahlführungsmittel dieser Sensoren 1 mit unterschiedlichen Drehzahlen betrieben werden.

Zudem wird erfindungsgemäß zur Generierung des Objektfeststellungssignals, insbesondere des Schaltsignals, eine Mehrfachscanauswertung durchgeführt. Eine Objektmeldung wird nur dann generiert, wenn in mehreren vorzugsweise direkt aufeinanderfolgenden Scans 51, 52 dasselbe Detektionsergebnis erhalten wird. Besonders vorteilhaft werden zwei aufeinanderfolgende Scans 51, 52 zur Generierung des Objektfeststellungssignals herangezogen.

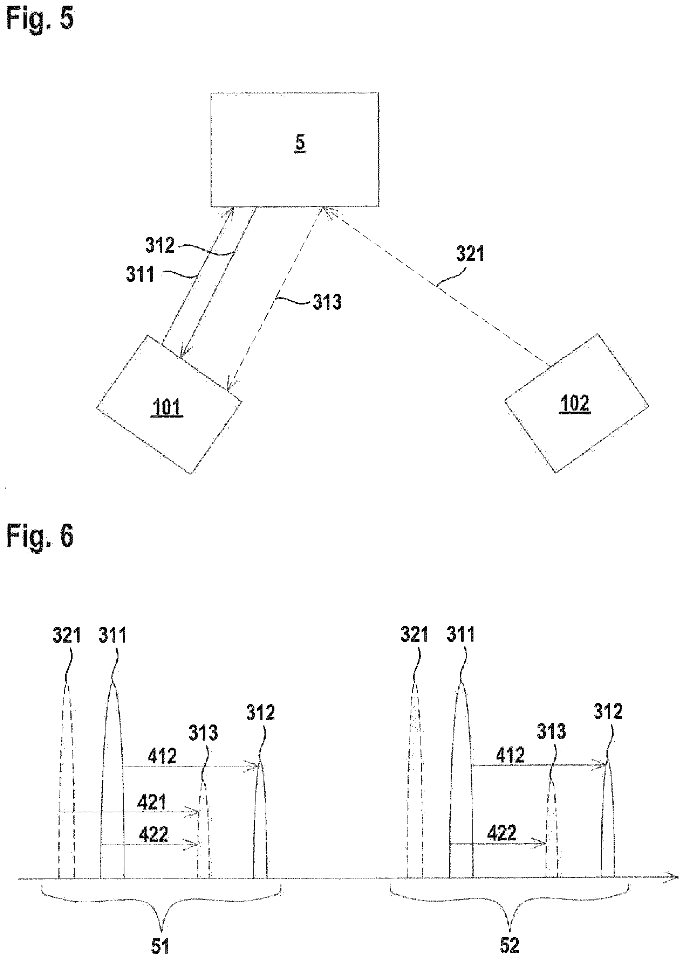

Durch diese Maßnahmen werden gegenseitige Beeinflussungen von Sensoren 1, wie in den Figuren 5 bis 7 veranschaulicht, vermieden.

Figur 5 zeigt schematisch eine Applikation mit zwei optische Sensoren 101, 102, deren Aufbau den Sensoren 1 gemäß Figur 1 beziehungsweise 2 entspricht. Wie Figur 5 zeigt, wird mit dem ersten optischen Sensor 101 ein Objekt 5 detektiert.

Der optische Sensor 101 emittiert hierzu Sendelicht in Form von Sendelichtimpulsen 311, die in Form von Empfangslichtimpulsen 312 vom Objekt 5 zum Empfänger 4 dieses optischen Sensors 101 zurückreflektiert werden. Aus der Lichtlaufzeit dieser Lichtsignale zum Objekt 5 und zurück zum optischen Sensor 101 wird die Distanz des Objekts 5 zum optischen Sensor 101 bestimmt.

Der zweite optische Sensor 102 emittiert ebenfalls Sendelichtimpulse 321 in Richtung des Objekts 5, wobei diese vom Objekt 5 so reflektiert werden, dass diese als Empfangslichtimpulse 313 zum optischen Sensor 101 reflektiert werden, das heißt dort als Störeinstrahlung vorliegen.

Figur 6 zeigt ein Zeitdiagramm der Signalauswertung für die Anordnung der Figur 5 für den Fall, dass die Strahlführungsmittel der optischen Sensoren 101, 102 mit derselben Drehzahl betrieben werden. Dabei sind in Figur 6 die am optischen Sensor 101 erhaltenen Signale für zwei aufeinanderfolgende Scans 51, 52 dargestellt.

Figur 6 zeigt, dass der Sendelichtimpuls 311 des optischen Sensors 101 zeitlich versetzt zum Sendelichtimpuls 321 des optischen Sensors 102 emittiert wird. Der Sendelichtimpuls 311 des optischen Sensors 101 wird vom Objekt 5 zurückreflektiert und trifft um eine Zeitdifferenz 412 als Empfangslichtimpuls 312 versetzt auf den Empfänger 4 des optischen Sensors 101. Diese Zeitdifferenz 412 entspricht der Lichtlaufzeit des Sendelichtimpulses 311 zum Objekt 5 und zurück zum Empfänger 4 des optischen Sensors 101. Dies liefert einen korrekten Distanzwert für die Distanz des Objekts 5 zum optischen Sensor 101.

Jedoch wird, wie Figur 6 zeigt, der Sendelichtimpuls 321 des zweiten optischen Sensors 102 vom Objekt 5 zum optischen Sensor 101 reflektiert und generiert dort den Empfangslichtimpuls 313. Der optische Sensor 101 registriert dabei die Zeitdifferenz 422 zwischen dem Sendelichtimpuls 311 und dem eines Störlichtpuls bildenden Empfangslichtimpulses 313 des zweiten optischen Sensors 102.

Dies führt zur Generierung eines verfälschten Distanzwerts für die Distanz des Objekts 5 zum optischen Sensor 101.

In Figur 6 ist für den Scan 51 zudem die Zeitdifferenz 421 eingezeichnet, das für die Distanzmessung des zweiten optischen Sensors 102 erhalten wird.

Da die Strahlführungsmittel der optischen Sensoren 101, 102 in diesem Fall mit derselben Drehzahl betrieben werden, wiederholen sich die Signale während des ersten Scans 51 exakt wieder im zweiten Scan 52. Damit registriert der optische Sensor 101 wieder die verfälschte Zeitdifferenz 422. Da in zwei aufeinanderfolgenden Scans 51, 52 die Zeitdifferenz 422 registriert wird, wird dieses zur Generierung des Objektfeststellungssignals herangezogen, wodurch die Distanz des Objekts 5 im optischen Sensor 101 falsch bestimmt wird.

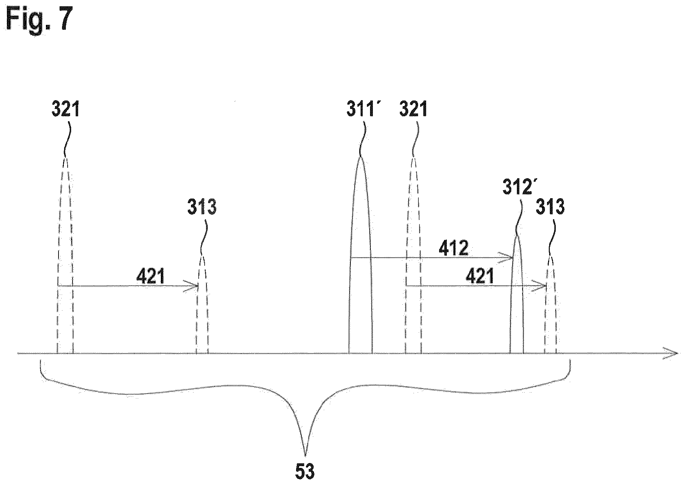

Um derartige Fehldetektionen zu vermeiden, werden die Strahlführungsmittel der optischen Sensoren 101, 102 mit unterschiedlichen Drehzahlen betrieben, was in Figur 7 veranschaulicht ist.

In Figur 7 sind mit dem Zeitintervall 53 zwei aufeinanderfolgende Scans des optischen Sensors 102 dargestellt, wobei bei jedem Scan der optische Sensor 102 einen Sendelichtimpuls 321 emittiert, der zum Objekt 5 geführt ist und von dort zurück zum Empfänger 4 des optischen Sensors 102 als Empfangslichtimpuls 313 geführt ist. In den beiden Scans 51, 52 werden im optischen Sensor 102 mit den Sendelichtimpulsen 321 und Empfangslichtimpuls 313 zweimal dieselbe Zeitdifferenz 421 gemessen. Da in zwei aufeinanderfolgenden Scans dieselbe Zeitdifferenz 421 gemessen wird, wird diese zur Generierung des Objektfeststellungssignals im optischen Sensor 102 herangezogen.

Der optische Sensor 101 emittiert Sendelichtimpulse 311', die als Empfangslichtimpulse 312' von diesem optischen Sensor 101 empfangen werden, womit im optischen Sensor 101 Distanzmessungen durchgeführt werden.

Die Sendelichtimpulse 311' des optischen Sensors 101 werden auch vom Objekt 5 als Störstrahlung in den optischen Sensor 102 reflektiert. Jedoch führt dies, anders als bei dem Fall von Figur 6, nicht zu Fehldetektionen. Da die Strahlführungsmittel der optischen Sensoren 101, 102 mit unterschiedlichen Drehzahlen betrieben werden, erfolgt eine zeitliche Überlappung der Messintervalle der optischen Sensoren 101, 102 nur während des zweiten Scans des optischen Sensors 102 nicht jedoch während des ersten.

Allgemein ausgedrückt kann es durch die unterschiedlichen Drehzahlen der Strahlführungsmittel der beiden optischen Sensoren 101, 102 nicht vorkommen, dass durch eine Störeinstrahlung einer der optischen Sensoren 101 oder 102 in den anderen optischen Sensor 102 oder 101 in zwei aufeinanderfolgenden Scans der gleiche verfälschte Distanzmesswert registriert wird. Da jedoch zur Generierung des Objektfeststellungssignals im optischen Sensor 101 oder 102 in wenigstens zwei aufeinanderfolgenden Scans derselbe oder ein ähnlicher, zumindest geringerer Distanzwert erhalten werden muss, damit das Objektfeststellungssignal generiert wird, werden fehlerhafte Messungen aufgrund von Störeinstrahlungen verworfen und führen nicht zur Generierung verfälschter Objektfeststellungssignalen. Dieses Verfahren kann auch auf mehr als zwei aufeinanderfolgenden Scans angewendet werden, z.B. derart, dass mindestens N aufeinanderfolgende Scans bewertet werden und eine Objektfeststellung nur dann erfolgt wenn in allen N Scans derselbe oder ähnliche Distanzwerte ermittelt werden, bzw. wenn in mindestens einem der N Scans ein anderer oder größerer Distanzwert ermittelt wird und damit kein Objektfeststellungssignal generiert wird.

### Bezugszeichenliste

- (1): Sensor
- (2): Lichtstrahl
- (3): Sender
- (4): Empfänger
- (5): Objekt
- (6): Gehäuse
- (7): Empfangsoptik
- (8): Ablenkeinheit
- (9): Drehspiegel
- (10): Messkopf
- (11): Sockel
- (12): Sensoranordnung
- (13): Fahrzeug
- (14): Fahrzeugsteuerung
- (15): Schutzfeld
- (16): Steuerlogik
- (17): Sensormesstechnik
- (18): Schnittstelle
- (19): Drehzahl-Vektor
- (20): Antriebssystem
- (51): Scan
- (52): Scan
- (53): Zeitintervall
- (101): Optischer Sensor
- (102): Optischer Sensor
- (311, 311'): Sendelichtimpuls
- (312, 312'): Empfangslichtimpuls
- (313): Empfangslichtimpuls
- (321): Sendelichtimpuls
- (412): Zeitdifferenz
- (421): Zeitdifferenz
- (422): Zeitdifferenz
- D: Drehachse

## Patentansprüche

1. Sensor (1) zur Erfassung von Objekten (5) in einem Überwachungsbereich mit einem Sendestrahlen emittierenden Sender (3) und einem Empfangsstrahlen empfangenden Empfänger (4), mit einem Strahlführungsmittel, das eine Drehbewegung ausführt, so dass die Sendestrahlen innerhalb aufeinanderfolgenden Scans (51, 52) periodisch innerhalb des Überwachungsbereichs geführt sind, und mit einer Auswerteeinheit, in welcher abhängig von Empfangssignalen des Empfängers (4) ein Objektfeststellungssignal generiert wird,wobei zur Generierung des Objektfeststellungssignals Empfangssignale mehrerer Scans (51, 52) herangezogen werden, **dadurch gekennzeichnet dass** in einem Einrichtbetrieb eine Drehzahl des Strahlführungsmittels ausgewählt wird, wobei in einem darauffolgenden Arbeitsbetrieb, in welchem Objekterfassungen erfolgen, das Strahlführungsmittel mit dieser Drehzahl betrieben wird.

2. Sensor (1) nach Anspruch 1, **dadurch gekennzeichnet, dass** die Drehzahl mittels eines Drehzahl-Index aus einem Drehzahl-Vektor (19) ausgewählt wird.

3. Sensor (1) nach Anspruch 2, **dadurch gekennzeichnet, dass** der Drehzahl-Index und/oder der Drehzahl-Vektor (19) durch eine Prüfsumme abgesichert ist.

4. Sensor (1) nach einem der Ansprüche 2 oder 3, **dadurch gekennzeichnet, dass** der Drehzahl-Index ein Konfigurations-Parameter ist oder aus einem Konfigurations-Parameter abgeleitet wird.

5. Sensor (1) nach einem der Ansprüche 2 oder 3, **dadurch gekennzeichnet, dass** dieser eine Seriennummer aufweist, und dass der Drehzahl-Index aus der Seriennummer abgeleitet ist.

6. Sensor (1) nach einem der Ansprüche 1 bis 5, **dadurch gekennzeichnet, dass** in dessen Produktionsprozess die Drehzahl des Strahlführungsmittels festgelegt wird.

7. Sensor (1) nach einem der Ansprüche 1 bis 6, **dadurch gekennzeichnet, dass** zur Generierung eines Objektfeststellungssignals die Empfangssignale mehrerer aufeinanderfolgenden Scans (51, 52) herangezogen werden.

8. Sensor (1) nach Anspruch 7, **dadurch gekennzeichnet, dass** zur Generierung eines Objektfeststellungssignals die Empfangssignale zweier oder mehrerer direkt aufeinanderfolgender Scans (51, 52) herangezogen werden.

9. Sensor (1) nach einem der Ansprüche 1 bis 8, **dadurch gekennzeichnet, dass** der Sender (3) und der Empfänger (4) in einem rotierenden Messkopf (10) gelagert sind, welcher das Strahlführungsmittel bildet.

10. Sensor (1) nach einem der Ansprüche 1 bis 8, **dadurch gekennzeichnet, dass** die Sendestrahlen über eine rotierende Ablenkeinheit (8) geführt sind, die das Strahlführungsmittel bildet.

11. Sensor (1) nach Anspruch 10, **dadurch gekennzeichnet, dass** die Ablenkeinheit (8) einen Drehspiegel (9) oder ein Polygonspiegelrad aufweist.

12. Sensor (1) nach einem der Ansprüche 1 bis 11, **dadurch gekennzeichnet, dass** dieser ein optischer Sensor (101, 102) oder ein Radarsensor ist.

13. Sensor (1) nach einem der Ansprüche 1 bis 12, **dadurch gekennzeichnet, dass** dieser ein Flächendistanzsensor ist.

14. Sensor (1) nach einem der Ansprüche 1 bis 13, **dadurch gekennzeichnet, dass** dieser ein Sicherheitssensor ist.

15. Sensor (1) nach einem der Ansprüche 1 bis 14, **dadurch gekennzeichnet, dass** dieser eine Schnittstelle (18) zum Anschluss an eine externe Steuereinheit aufweist.

16. Sensor (1) nach Anspruch 15, **dadurch gekennzeichnet, dass** über die Schnittstelle (18) Messdaten an die externe Steuereinheit übertragen werden.

17. Sensor (1) nach einem der Ansprüche 15 oder 16, **dadurch gekennzeichnet, dass** die externe Steuereinheit ein Navigationssystem ausbildet.

18. Sensor (1) nach einem der Ansprüche 1 bis 15, **dadurch gekennzeichnet, dass** dieser auf einer mobilen Einheit angeordnet ist.

19. Verfahren zum Betrieb eines Sensors zur Erfassung von Objekten (5) in einem Überwachungsbereich mit einem Sendestrahlen emittierenden Sender (3) und einem Empfangsstrahlen empfangenden Empfänger (4), mit einem Strahlführungsmittel, das eine Drehbewegung ausführt, so dass die Sendestrahlen innerhalb aufeinanderfolgenden Scans (51, 52) periodisch innerhalb des Überwachungsbereichs geführt sind, und mit einer Auswerteeinheit, in welcher abhängig von Empfangssignalen des Empfängers (4) ein Objektfeststellungssignal generiert wird, wobei zur Generierung des Objektfeststellungssignals Empfangssignale mehrerer Scans (51, 52) herangezogen werden, **dadurch gekennzeichnet dass** in einem Einrichtbetrieb eine Drehzahl des Strahlführungsmittels ausgewählt wird, wobei in einem darauffolgenden Arbeitsbetrieb, in welchem Objekterfassungen erfolgen, das Strahlführungsmittel mit dieser Drehzahl betrieben wird.

## Claims

1. A sensor (1) for detecting objects (5) in a monitoring area, having a transmitter (3) emitting transmitted beams and a receiver (4) receiving received beams, having a beam guiding means which executes a rotary movement so that the transmitted beams are periodically guided within the monitoring area within successive scans (51, 52) are periodically guided within the monitoring area, and with an evaluation unit in which an object detection signal is generated as a function of received signals from the receiver (4),
wherein received signals from a plurality of scans (51, 52) are used to generate the object detection signal,
**characterised in that** in a set-up mode a rotational speed of the beam guiding means is selected, whereby in a subsequent working mode, in which object detections take place, the beam guiding means is operated at this rotational speed.

2. A sensor (1) according to claim 1, **characterised in that** the rotational speed is selected from a rotational speed vector (19) by means of a rotational speed index.

3. A sensor (1) according to claim 2, **characterised in that** the speed index and/or the speed vector (19) is protected by a checksum.

4. A sensor (1) according to one of claims 2 or 3, **characterised in that** the speed index is a configuration parameter or is derived from a configuration parameter.

5. A sensor (1) according to one of claims 2 or 3, **characterised in that** it has a serial number and that the speed index is derived from the serial number.

6. A sensor (1) according to one of claims 1 to 5, **characterised in that** the rotational speed of the blasting medium is determined in its production process.

7. A sensor (1) according to one of claims 1 to 6, **characterised in that** the received signals of several successive scans (51, 52) are used to generate an object detection signal.

8. A sensor (1) according to claim 7, **characterised in that** the received signals of two or more directly successive scans (51, 52) are used to generate an object detection signal.

9. A sensor (1) according to one of claims 1 to 8, **characterised in that** the transmitter (3) and the receiver (4) are mounted in a rotating measuring head (10), which forms the beam guiding means.

10. A sensor (1) according to one of claims 1 to 8, **characterised in that** the transmitted beams are guided via a rotating deflection unit (8), which forms the beam guiding means.

11. A sensor (1) according to claim 10, **characterised in that** the deflection unit (8) has a rotating mirror (9) or a polygonal mirror wheel.

12. A sensor (1) according to one of claims 1 to 11, **characterised in that** this is an optical sensor (101, 102) or a radar sensor.

13. A sensor (1) according to one of claims 1 to 12, **characterised in that** it is an area distance sensor.

14. A sensor (1) according to one of claims 1 to 13, **characterised in that** it is a safety sensor.

15. A sensor (1) according to one of claims 1 to 14, **characterised in that** it has an interface (18) for connection to an external control unit.

16. A sensor (1) according to claim 15, **characterised in that** measurement data is transmitted to the external control unit via the interface (18).

17. A sensor (1) according to one of claims 15 or 16, **characterised in that** the external control unit forms a navigation system.

18. A sensor (1) according to one of claims 1 to 15, **characterised in that** it is arranged on a mobile unit.

19. A method for operating a sensor for detecting objects (5) in a monitoring area with a transmitter (3) emitting transmitting beams and a receiver (4) receiving receiving beams, with a beam guiding means which executes a rotary movement so that the transmitting beams are periodically guided within successive scans (51, 52) are periodically guided within the monitoring area, and with an evaluation unit in which an object detection signal is generated as a function of received signals from the receiver (4), wherein received signals from a plurality of scans (51, 52) are used to generate the object detection signal, **characterised in that** in a set-up mode, a rotational speed of the beam guiding means is selected, whereby in a subsequent working mode, in which object detections take place, the beam guiding means is operated at this rotational speed.

## Revendications

1. Capteur (1) pour la détection d'objets (5) dans une zone de surveillance, comportant un émetteur (3) émettant des faisceaux transmis et un récepteur (4) recevant des faisceaux reçus, comportant un moyen de guidage des faisceaux qui exécute un mouvement rotatif de sorte que les faisceaux transmis sont périodiquement guidés à l'intérieur de la zone de surveillance à l'intérieur de balayages successifs (51, 52) sont guidés périodiquement dans la zone de surveillance, et avec une unité d'évaluation dans laquelle un signal de détection d'objet est généré en fonction des signaux reçus du récepteur (4), les signaux reçus d'une pluralité de balayages (51, 52) étant utilisés pour générer le signal de détection d'objet, **caractérisé en ce que**,
dans un mode de configuration, une vitesse de rotation du moyen de guidage du faisceau est sélectionnée, de sorte que dans un mode de fonctionnement ultérieur, dans lequel des détections d'objets se produisent, le moyen de guidage du faisceau fonctionne à cette vitesse de rotation.

2. Capteur (1) selon la revendication 1, **caractérisé par le fait que** la vitesse de rotation est sélectionnée dans un vecteur de vitesse de rotation (19) au moyen d'un indice de vitesse de rotation.

3. Capteur (1) selon la revendication 2, **caractérisé par le fait que** l'indice de vitesse et/ou le vecteur de vitesse (19) est protégé par une somme de contrôle.

4. Capteur (1) selon l'une des revendications 2 ou 3, **caractérisé par le fait que** l'indice de vitesse est un paramètre de configuration ou est dérivé d'un paramètre de configuration.

5. Capteur (1) selon l'une des revendications 2 ou 3, **caractérisé par le fait qu'**il possède un numéro de série et que l'indice de vitesse est dérivé du numéro de série.

6. Capteur (1) selon l'une des revendications 1 à 5, **caractérisé par le fait que** la vitesse de rotation de l'agent de sablage est déterminée au cours du processus de production.

7. Capteur (1) selon l'une des revendications 1 à 6, **caractérisé par le fait que** les signaux reçus de plusieurs balayages successifs (51, 52) sont utilisés pour générer un signal de détection d'objet.

8. Capteur (1) selon la revendication 7, **caractérisé par le fait que** les signaux reçus de deux ou plusieurs balayages directement successifs (51, 52) sont utilisés pour générer un signal de détection d'objet.

9. Capteur (1) selon l'une des revendications 1 à 8, **caractérisé par le fait que** l'émetteur (3) et le récepteur (4) sont montés dans une tête de mesure rotative (10), qui constitue le moyen de guidage du faisceau.

10. Capteur (1) selon l'une des revendications 1 à 8, **caractérisé par le fait que** les faisceaux transmis sont guidés par une unité de déviation rotative (8), qui constitue le moyen de guidage des faisceaux.

11. Capteur (1) selon la revendication 10, **caractérisé par le fait que** l'unité de déviation (8) comporte un miroir rotatif (9) ou une roue à miroir polygonale.

12. Capteur (1) selon l'une des revendications 1 à 11, **caractérisé par le fait qu'**il s'agit d'un capteur optique (101, 102) ou d'un capteur radar.

13. Capteur (1) selon l'une des revendications 1 à 12, **caractérisé par le fait qu'**il s'agit d'un capteur de distance de zone.

14. Capteur (1) selon l'une des revendications 1 à 13, **caractérisé par le fait qu'**il s'agit d'un capteur de sécurité.

15. Capteur (1) selon l'une des revendications 1 à 14, **caractérisé en ce qu'**il possède une interface (18) pour la connexion à une unité de commande externe.

16. Capteur (1) selon la revendication 15, **caractérisé par le fait que** les données de mesure sont transmises à l'unité de commande externe via l'interface (18).

17. Capteur (1) selon l'une des revendications 15 ou 16, **caractérisé par le fait que** l'unité de commande externe constitue un système de navigation.

18. Capteur (1) selon l'une des revendications 1 à 15, **caractérisé par le fait qu'**il est placé sur une unité mobile.

19. Procédé de fonctionnement d'un capteur de détection d'objets (5) dans une zone de surveillance avec un émetteur (3) émettant des faisceaux de transmission et un récepteur (4) recevant des faisceaux, avec un moyen de guidage des faisceaux qui exécute un mouvement rotatif de sorte que les faisceaux de transmission sont périodiquement guidés à l'intérieur de balayages successifs (51, 52) dans la zone de surveillance, et avec une unité d'évaluation dans laquelle un signal de détection d'objet est généré en fonction des signaux reçus du récepteur (4), les signaux reçus d'une pluralité de balayages (51, 52) étant utilisés pour générer le signal de détection d'objet,
**caractérisé en ce que**,
dans un mode de configuration, une vitesse de rotation du moyen de guidage du faisceau est sélectionnée, de sorte que dans un mode de fonctionnement ultérieur, au cours duquel des détections d'objets se produisent, le moyen de guidage du faisceau est utilisé à cette vitesse de rotation.
